# EUROPEAN PATENT APPLICATION

(11) **EP 2 278 779 A1**
(43) Date of publication of application: **26.01.2011**
(21) Application number: 10156479.7
(22) Date of filing: 15.03.2010
(51) Int. Cl.: H04M 1/57, H04M 1/725, G06Q 10/00

(54) **Systems and methods for generating calendar events associated with contact information**

(30) Priority: 30.06.2009 US 221700 P
(71) Applicant: Research In Motion Limited, Waterloo, ON N2L 3W8 (CA)
(72) Inventor: Balannik, Vadim, Rolling Meadows, IL 60008 (US); Ellis, Patrick D, Rolling Meadows, IL 60008 (US)
(74) Representative: Rickard, David John

(57) **Abstract**

The described embodiments relate generally to systems and methods for generating calendar events that include contact information. In example embodiments, upon an unanswered incoming call being regarded as a missed call, a calendar event is generated and stored in a calendar database. The generated calendar event includes contact information corresponding to the missed call. The systems and methods also provide notifications based on a scheduled calendar event, wherein the notifications provide an option to directly place an outgoing call to the contact information included in the calendar event.

## Description

Embodiments described herein relate generally to electronic calendars with particular, but by no means exclusive, application to mobile devices.

Mobile devices typically provide communications functionality, and are often capable of receiving incoming voice calls. Occasionally an incoming call may not be answered - for a plurality of reasons - and may be regarded as a missed call.

It is desired to address or ameliorate one or more shortcomings or disadvantages associated with existing ways of managing missed phone calls, or to at least provide a useful alternative to such ways.

### GENERAL

Embodiments described herein are generally directed to systems and methods for generating calendar events corresponding to unanswered incoming calls, and to providing notifications on a mobile device to remind a user to return an unanswered incoming call.

It may often be desirable for the mobile device to provide a reminder notification in the future so that a missed call can be returned within an appropriate time period. It may also be desirable to be able to return the missed call quickly and easily, preferably with minimal input from the user.

In a broad aspect, there may be provided a system for generating a calendar event, the device comprising a communications module adapted to send and receive communication signals, a calendar database for storing a plurality of calendar events, and a communication enabled calendar event generation module operatively coupled to the communications module and to the calendar database, the communication enabled calendar event generation module configured to generate a calendar event associated with a contact information data corresponding to a missed call data and a reminder time. In some implementations, the calendar event is configured to operate with a Personal Information Manager (PIM) application stored on the system. As well, the system may be a mobile device.

In some implementations, the device may further comprise a notification module operatively coupled to the communication enabled calendar event generation module and to the calendar database, the notification module configured to generate a first notification corresponding to the missed call data.

In further implementations, the first notification may comprise a selectable option for inputting the reminder time. In addition or alternatively, the first notification may comprise a selectable option to set the reminder time to a default reminder time. Further, the first notification may comprise a list of at least one selectable option, each selectable option corresponding to an available timeslot in the calendar database for the reminder time.

In some implementations, the notification module may be further configured to generate a second notification at the reminder time, the second notification comprising a selectable option which, when selected, causes the communications module to call a contact number associated with the contact information data.

Another broad aspect may be directed to a method for generating a calendar event, the method comprising: receiving a missed call data corresponding to a contact information; determining a reminder time; and generating and storing in a calendar the calendar event corresponding to the contact information and the reminder time.

In some implementations, the step of determining a reminder time may involve generating a first notification corresponding to the missed call data. The first notification may comprise a selectable option for inputting the reminder time. In addition or alternatively, the first notification may comprise a selectable option to set the reminder time to a default reminder time. Further, the first notification may comprise a list of at least one selectable option, each selectable option corresponding to an available timeslot in the calendar database for the reminder time.

In some implementations, the method may further comprise generating a second notification at the reminder time, the second notification comprising a selectable option. As well, the method may further comprise calling a contact number corresponding to the contact information associated with the calendar event when the selectable option is selected.

Further, it may often be desirable to associate a contact number with an existing calendar event (for example a conference call) so that when a reminder notification for the event is displayed a user may have the option to call the associated contact number quickly and easily, preferably with minimal input from the user.

Another broad aspect may be directed to a system for associating a calendar event with a contact information data, wherein the calendar event corresponds to an event time, the system comprising a calendar database for storing a plurality of calendar events; a communication enabled calendar event generation module operatively coupled to the calendar database, the communication enabled calendar event generation module being configured to associate the calendar event with the contact information data. In some implementations, the system may include a notification module operatively coupled to the calendar database, configured to generate a notification at the event time, the notification comprising a selectable option which, when selected, causes a communications module to call a contact number corresponding to the contact information data associated with the calendar event. In some implementations, the contact number may be a phone number.

Another broad aspect may be directed to a method for associating contact information with a calendar event, wherein the calendar event corresponds to an event time, the method comprising selecting the calendar event, receiving a contact information input corresponding to a contact information, and associating the contact information with the calendar event. In some implementations, the method may include generating a notification at a time corresponding to the event time, the notification comprising a selectable option, which when selected, causes a mobile communications device to call a contact number corresponding to the contact information; and selecting the selectable option. In some implementations, the contact number may be a phone number.

A computer-readable medium may also be provided comprising instructions executable on a processor for implementing the method(s). In some implementations, the computer-readable medium may be non-transitory.

These and other aspects and features of various embodiments will be described in greater detail below.

Some embodiments described herein may make use of a mobile station. A mobile station is a two-way communication device with advanced data communication capabilities having the capability to communicate with other computer systems, and is also referred to herein generally as a mobile device. A mobile device may also comprise the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device communicates with other devices through a network of transceiver stations.

### BRIEF DESCRIPTION OF THE DRAWINGS

For a better understanding of the described example embodiments and to show more clearly how they may be carried into effect, reference will now be made, by way of example, to the accompanying drawings in which:

FIG. 1 is a block diagram of a mobile device in one example implementation;

FIG. 2 is a block diagram of a communication sub-system component of the mobile device of FIG. 1;

FIG. 3 is a block diagram of a node of a wireless network;

FIG. 4 is a schematic diagram showing in further detail various components of the mobile device of FIG. 1;

FIG. 5A is a graphical representation of an example address book data structure;

FIG. 5B is a graphical representation of an example calendar database data structure;

FIG. 6A is an example screenshot showing a first notification of a missed call;

FIG. 6B is an example screenshot showing a notification with options to input date and time data;

FIG. 6C is an example screenshot showing an example calendar event as may be viewable through a PIM application;

FIG. 6D is an example screenshot showing details of an example calendar event as may be viewable through a PIM application;

FIG. 6E is an example screenshot showing a second notification of a calendar event;

FIG. 6F is an example screenshot showing a notification to allow an alternate contact number to be selected;

FIG. 6G is an example screenshot showing an example call log;

FIG. 6H is an example screenshot showing a menu with a selectable option to create a calendar event;

FIG. 6J is an example screenshot showing address book data as may be displayed on the display of a mobile device;

FIG. 6K is an example screenshot showing a menu with a selectable option to create a calendar event;

FIG. 7 is a flowchart of a method for generating a calendar event as may be used by a mobile device; and

FIG. 8 is a flowchart of a method for associating a calendar event with contact information.

### DESCRIPTION OF PREFERRED EMBODIMENTS

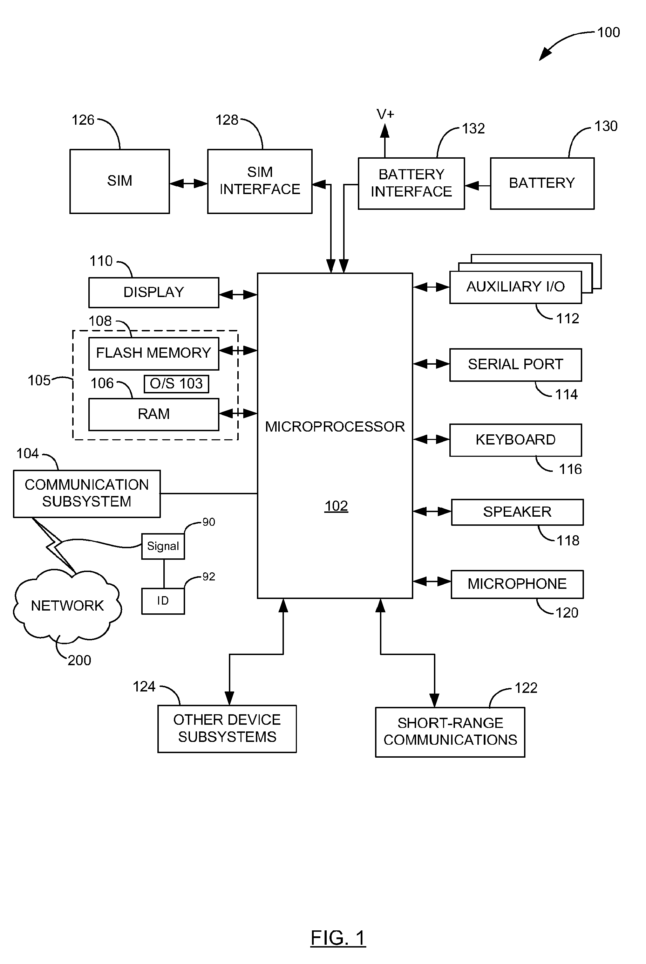

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor or CPU 102. Microprocessor 102 is typically programmed with an operating system 103 and controls the overall operation of mobile device 100. In some embodiments, certain communication functions, including data and voice communications, are performed through a communications module also referred to herein as a communication subsystem 104. Communication subsystem 104 receives communications signals 90 (also referred to herein as "messages") from and sends messages to a wireless network 200. By way of example only, such communication signals 90 may correspond to phone calls, email or other data messages. Such communications signals 90 typically include identification information (such as caller ID information or identifier data 92) identifying the source of the message, as will be understood.

In this example implementation of mobile device 100, communication subsystem 104 is configured for cellular communication in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS).

New standards are still being defined, but it is believed that they will have similarities to the network behavior described herein, and it will also be understood by persons skilled in the art that the described embodiments are intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Alternatively, the network and device 100 might employ WiFi/WiMax radios utilizing SIP (session initialization protocols) and VolP (voice over internet protocols). Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems.

Microprocessor 102 also interacts with additional subsystems such as memory 105 which may include a Random Access Memory (RAM) 106 and flash memory 108, display 110, auxiliary input/output (I/O) subsystem 112, serial port 114, keyboard 116, speaker 118, microphone 120, short-range communications 122 and other devices 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator, media player or task list. Operating system software 103 code used by microprocessor 102 is typically stored in a persistent store such as flash memory 108, which may alternatively be a read-only memory (ROM) or similar storage element (not shown). Those skilled in the art will appreciate that the operating system software 103 code, specific device applications, or parts thereof, may be temporarily loaded into a volatile store such as RAM 106.

In some embodiments, mobile device 100 may send and receive communication signals 90 over network 200 after required network registration or activation procedures have been completed. Network access is associated with a subscriber or user of a mobile device 100. To identify a subscriber, mobile device 100 requires a Subscriber Identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200.

By inserting SIM 126 into SIM interface 128, a subscriber can access all subscribed services. Services could include: web browsing media transfers, such as music and/or image downloading or streaming, and messaging, such as e-mail, voice mail, Short Message Service (SMS), and Multimedia Messaging Services (MMS). More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information. In certain embodiments, SIM 126 may comprise a different type of user identifier and may be integral to mobile device 100 or not present at all.

Mobile device 100 is a battery-powered device and includes a battery interface 132 for receiving one or more rechargeable batteries 130. Battery interface 132 is coupled to a regulator (not shown), which assists battery 130 in providing power V+ to mobile device 100. Although current technology makes use of a battery, future technologies such as micro fuel cells may provide the power to mobile device 100.

Microprocessor 102, in addition to its operating system functions, enables execution of software applications on mobile device 100. A set of applications that control basic device operations, including data and voice communication applications, will normally be installed on mobile device 100 during its manufacture.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a voice call, text message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112.

Auxiliary I/O subsystem 112 may include devices such as: a touch screen, mouse, track ball, optical trackpad, infrared fingerprint detector, and one or more roller wheels with dynamic button pressing capability. Keyboard 116 comprises an alphanumeric keyboard and/or telephone-type keypad. A composed item may be transmitted over network 200 through communication subsystem 104. User input components comprised in auxiliary I/O subsystem 112 may be used by the user to navigate and interact with a user interface of mobile device 100.

For voice communications, the overall operation of mobile device 100 is substantially similar, except that the received signals would be output to speaker 118, and signals for transmission would be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

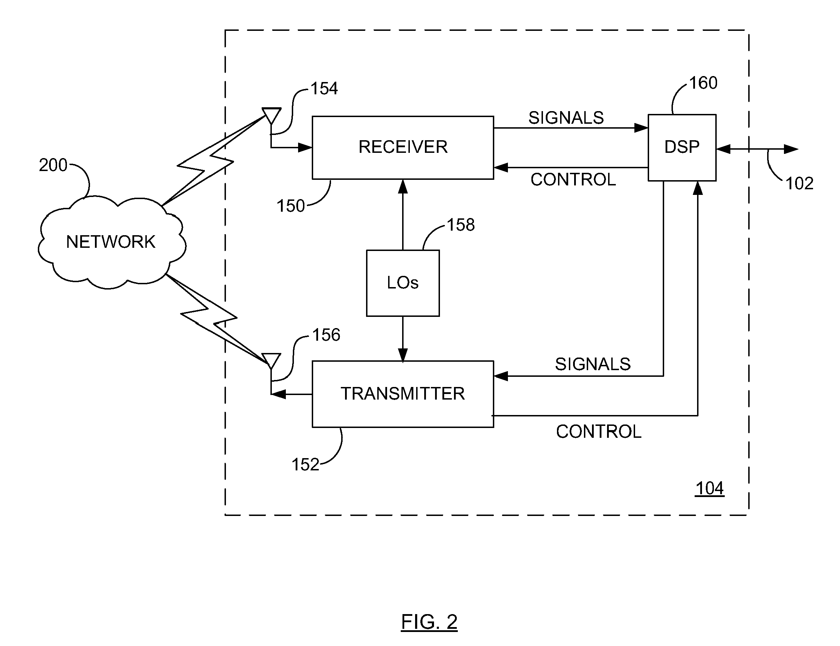

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals 90 (FIG. 1) received by antenna 154 through network 200 are input to receiver 150, which may perform such common receiver functions as signal amplification, frequency down conversion, filtering, channel selection, and analog-to-digital (A/D) conversion. A/D conversion of a received signal 90 allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

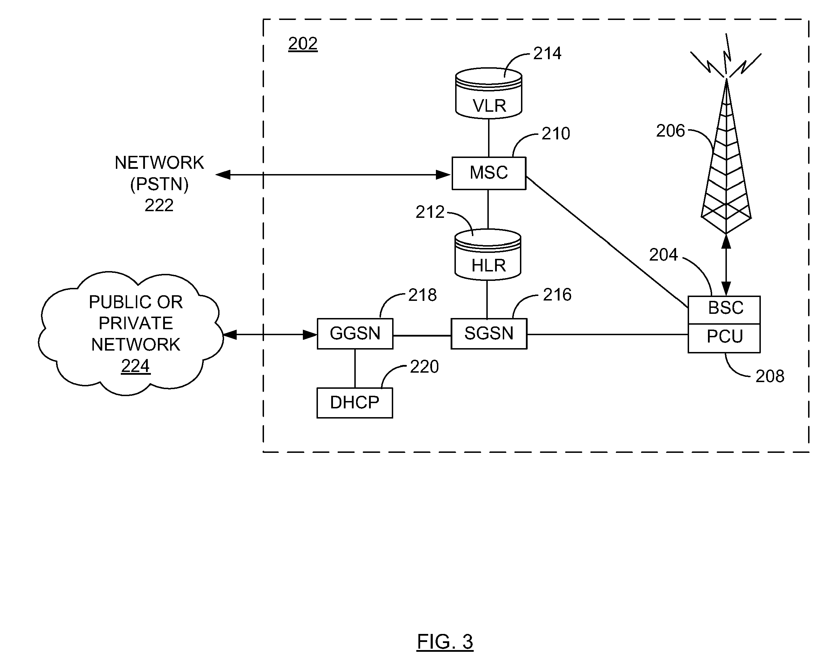

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further, VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSNs 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218.

There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

Embodiments of mobile device 100 may be equipped and configured for communication over a cellular connection via communication subsystem 104 and with a wireless local area network (WLAN) using a communication form commonly termed "Wi-Fi". Such Wi-Fi connections may employ a suitable WLAN-compatible communication technology, of which unlicensed mobile access (UMA) technology is one example. UMA technology provides access to GSM and GPRS mobile services over unlicensed spectrum technologies, including Bluetooth™ and 802.11 wireless connections. UMA enables cellular network subscribers to roam and hand over between cellular networks and public and private wireless networks using dual-mode mobile handsets. Mobile device 100 may also be configured for communication with local wireless devices, such as Bluetooth™ enabled devices and may be configured for communication in a global positioning system (GPS) context.

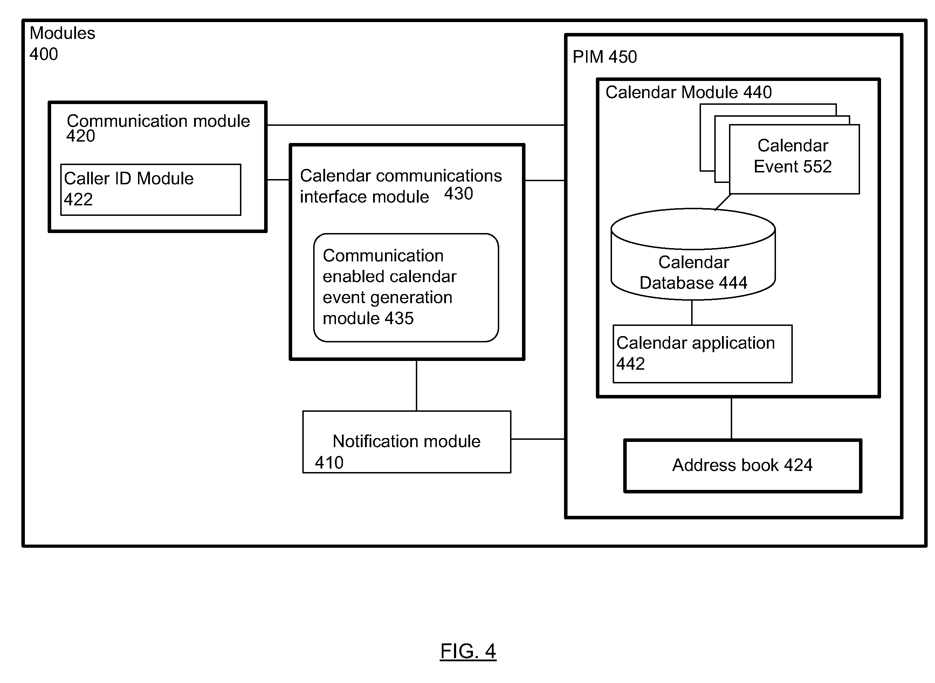

The configuration and operation of an example mobile device, such as mobile device 100, in the present context is described in further detail in relation to FIGS. 4 to 8.

Referring now to FIG. 4, components (or modules) 400 of mobile device 100 are shown and described in further detail.

An application that may be loaded onto mobile device 100 would be a personal information manager (PIM) 450. A PIM has functionality to organize and manage data items of interest to a subscriber, such as, but not limited to, e-mail, calendar events, voice mails, appointments, and task items. PIM application 450 has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

PIM application 450 may comprise a calendar module 440 for providing electronic calendar functionality. Electronic calendars provide an electronic version of a calendar, and can store and display scheduling information (e.g. meetings, appointments, holidays, and other events) to facilitate time management. Calendar module 440 may include a calendar application 442 and a calendar database 444.

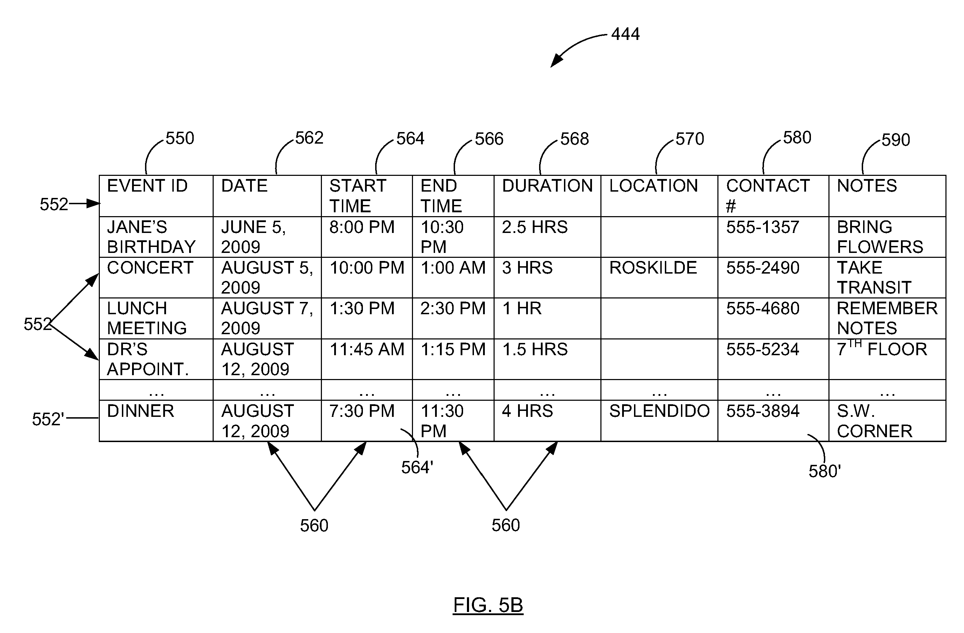

Referring briefly to FIG. 5B, calendar database 444 is configured to store a plurality of calendar event data records (or calendar events) 552 each containing calendar event data corresponding to an event identifier 550 (such as an event title, e.g. "Dinner"). Calendar events 552 may also include one or more corresponding temporal data 560 (for example a date 562, a start time 564, and an end time 566 and/or a duration 568) and corresponding location data 570 (such as a room identifier, e.g. "Conference Room B"). As will be discussed below, calendar events 552 may further contain corresponding contact number data 580.

Returning to FIG. 4, calendar database 444 may be part of PIM application 450 stored on the mobile device 100. Calendar database 444 may also be stored on or synchronized with a PIM application stored on a host computer system.

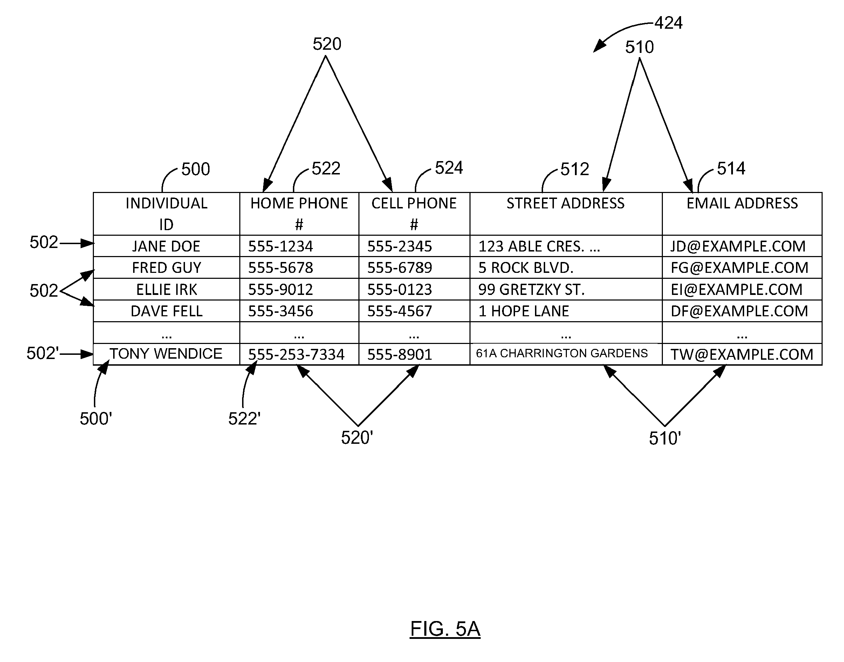

PIM application 450 may further comprise an address book 424. See FIG. 5A for a graphical representation of an example address book data structure. Address book 424 is configured to store a plurality of address data records 502 each containing contact information data corresponding to an individual identifier 500 (such as a name, e.g. "Tony Wendice") and one or more corresponding address data 510 (for example a mailing address 512, or email address 514) and corresponding contact numbers data 520 (for example a home phone number 522, cell phone number 524). Address book 424 may be stored in memory 105 or other data storage. Address data records 502 may also be stored on or synchronized with a PIM application stored on a host computer system.

Returning again to FIG. 4, mobile device 100 may include a communications module 420, configured to act as an interface between communications subsystem 104 and various applications loaded onto mobile device 100 (including, for example, PIM 450). Communications module 420 may comprise a caller ID module 422.

Caller ID module 422 provides identification information for received communications signals 90. In some situations, communication signals 90 may correspond to phone calls. Caller ID module 422 may include computer program instructions stored within memory 105 for execution by the CPU 102 for identifying incoming callers. Memory 105 comprises various other program code, such as other software applications, although these are not specifically shown for purposes of simplicity of illustration. Memory 105 is accessible by the CPU 102 and may also include highspeed cache memory. It will be understood that the functionality of caller ID module 422 may be provided or otherwise integrated with communications module 420, communication subsystem 104, or with a different module on mobile device 100.

As will be discussed in greater detail below, caller identifier module 422 is configured to provide identifier data 92 (FIG. 1) to a calendar communications interface module 430 (either directly or via communications module 420) when an incoming call is regarded as a missed call.

The calendar communications interface module 430 may include computer program instructions stored within memory 105 for execution by the CPU 102. As will be discussed in greater detail below, calendar communications interface module 430 is operatively coupled to the communications module 420 as well as to a personal information manager (PIM) application 450.

Calendar communications interface module 430 includes a communication enabled calendar event generation module (CECEGM) 435, for generating calendar events to be provided to the calendar module 440 (either directly or via PIM application 450).

CECEGM 435 is configured to generate a calendar event associated with contact information (such as a phone number) corresponding to identifier data 92 provided by caller ID module 422, and further corresponding to a determined reminder time. The reminder time is the time for which the generated calendar event will be scheduled. That is, referring briefly to FIG. 5B, the reminder time comprises temporal data 560 (for example a date 562, a start time 564, and an end time 566 and/or a duration 568). Some possible methods of determining a reminder time will be discussed below.

Returning to FIG. 4, CECEGM 435 is operatively coupled to the keyboard 116 or one or more of the user input components in the auxiliary I/O subsystem 112, such as a thumbwheel, trackball, optical trackpad, directional pad, joystick, or touchscreen to enable the user to select or otherwise generate user input received by the CPU 102, and selecting which selectable option the user wishes to select or otherwise manipulate, as will be discussed in greater detail, below. It will be understood that the functionality of CECEGM 435 may be provided or otherwise integrated with communications module 420, PIM application 450, or with a different module on mobile device 100.

When an incoming call to mobile device 100 is not answered, or is otherwise regarded as a missed call, an identifier data 92 representing the identity of the caller whose call was missed is provided to the CECEGM 435 (either directly or via calendar communications interface module 430) by caller ID module 422 or by communications module 420. CECEGM 435 is then operative to determine a reminder time.

In some embodiments, CECEGM 435 determines a default reminder time by accessing a reminder time stored in memory 105 (e.g. configuration settings that define a default reminder time). The default reminder time may be, for example, one hour from receiving the missed call, 9:00 AM the following business day, etc. Alternately, the default reminder time may be based on existing entries in the calendar database 444; for example, the next time there is an available timeslot (e.g. the next time for which there are no existing calendar events in calendar database 444 scheduled for 15, 30, or some other number of consecutive minutes, as determined from temporal data 560). The default reminder time may also depend on identifier data 92 (for example, the default settings may be different for business contacts and for personal contacts).

In other embodiments, CECEGM 435 determines a reminder time based on input by the user. In these embodiments, a notification module 410 is operative to generate a first notification that an incoming call was not answered and is being regarded as a missed call.

Notification module 410 is provided to generate notifications for display on the screen 110 of mobile device 100. Notification module 410 is operatively coupled and responsive to communications module 420, calendar communications interface module 430 and calendar module 440. Notification module 410 further includes or is operatively coupled to the keyboard 116 or one or more of the user input components in the auxiliary I/O subsystem 112, such as a thumbwheel, trackball, optical trackpad, directional pad, joystick, or touchscreen which enable the user to select or otherwise generate user input received by the CPU 102, and selecting which selectable option the user wishes to select or otherwise manipulate, as will be discussed in greater detail, below. It will be understood that the functionality of notification module 410 may be provided or otherwise integrated with communications module 420, or with a different module on mobile device 100.

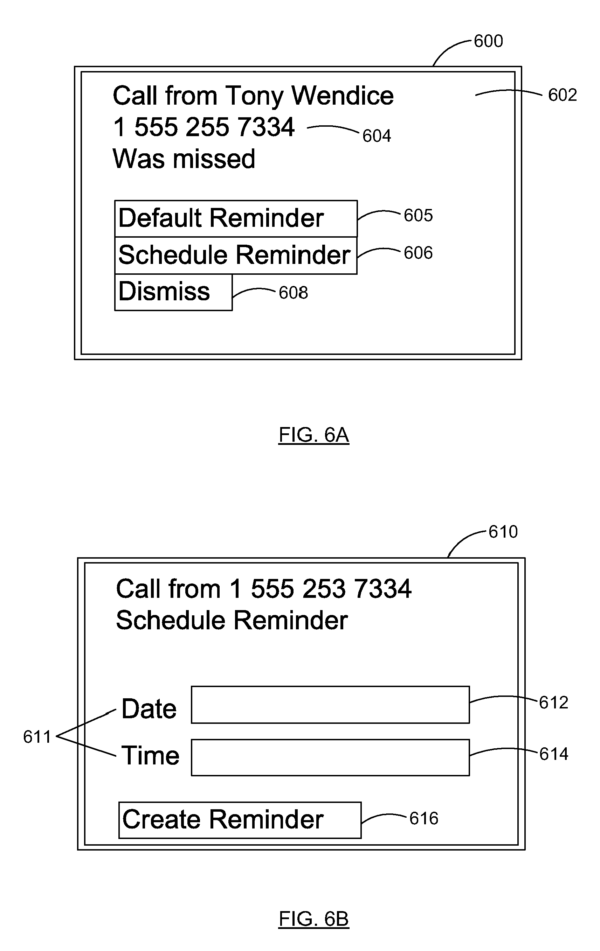

Referring briefly to FIG. 6A, illustrated therein is an example screenshot of a first notification 600 as may be generated by notification module 410 and displayed on the display 110. With this example, the first notification 600 is illustrated indicating that an incoming call from a number associated with "Tony Wendice" was not answered, and is regarded as a missed call. The identity of the caller may be provided to notification module 410 by caller ID module 422, communications module 420, from a different module on mobile device 100, or from the wireless network 200 identifier data 92.

As can be seen, first notification 600 may provide, display or otherwise comprise the contact number 604 of the missed call, and information 602 corresponding to the missed call, and a selectable option 606 for inputting a reminder time to be associated with the calendar event to be generated by the CECEGM 435. First notification 600 may also include a selectable option 608 to cancel the generation of a calendar event. The reminder time may be entered in input fields 611 present on the first notification (not shown), or input fields 611 for date and time data may be provided on a separate notification screen (as shown as 612 and 614, respectively, in the example screenshot 610 of FIG. 6B). This may enable a user to enter a fixed time (e.g. later today at 4:30 pm), and confirm the input by selecting selectable option 616 (FIG. 6B). Alternately, notification module 410 may be operative to include, display, or otherwise provide a list of selectable options for the next available timeslots (e.g. the next times for which there are no existing calendar events in calendar database 444 scheduled for 15, 30, or some other number of consecutive minutes, as determined from temporal data 560). The first notification 600 may include, display or otherwise provide a selectable option 605 to set the reminder time to a default reminder time as described previously.

Returning to FIGS. 4 and 5A-5B, once CECEGM 435 has received an identifier data 92 and determined a reminder time, CECEGM 435 creates a new calendar event. The new calendar event is comprised of an event identifier 550 (for example "Return Call"), temporal data 560 corresponding to the determined reminder time, and the received identifier data 92. It will be appreciated by those skilled in the art that CECEGM 435 may alternately store a reference to a contact identifier from address book 424 (e.g. address data record 502'). In some cases the contact information in the calendar event may be determined by CECEGM 435 referencing the identifier data 92 with address book 424 to check if there is an address data record 502 that matches or otherwise corresponds to the identifier data 92. For example, if identifier data 92 indicates that the call that was missed came from 1-555-253-7334, and address book 424 contains an address data record 502' with 1-555-253-7334 stored as home phone number 522', CECEGM 435 may create a calendar event with an event identifier 550 based on an individual identifier 500' (for example "Return Call to Tony Wendice"), temporal data 560 corresponding to the determined reminder time, and a contact number 520' from the corresponding address data record 502'.

Referring again to FIG 5B, in some embodiments the data structure of calendar event 552 generated by CECEGM 435 may be fully compliant with RFC 2445 or other standards. Alternatively, the data structure of calendar event 552 may be formatted, structured or organized in a way so as to enable a PIM application to recognize, interact or otherwise operate with the data contained therein. Example PIM applications include Microsoft Outlook™, Entourage™, BlackBerry™ Calendar, etc. However, the database structures of these PIM applications may lack a dedicated contact number data field 580 for associating contact information with a calendar event 552. In this case, the contact information may be stored in an existing field of the database structure, preferably a field that is rarely used. For example, the contact information could be stored in the 'notes' field of an Outlook™ calendar event, shown as 590 in the sample calendar database 444. Alternatively, the calendar event could have the contact information stored in a distinct contact number field 580.

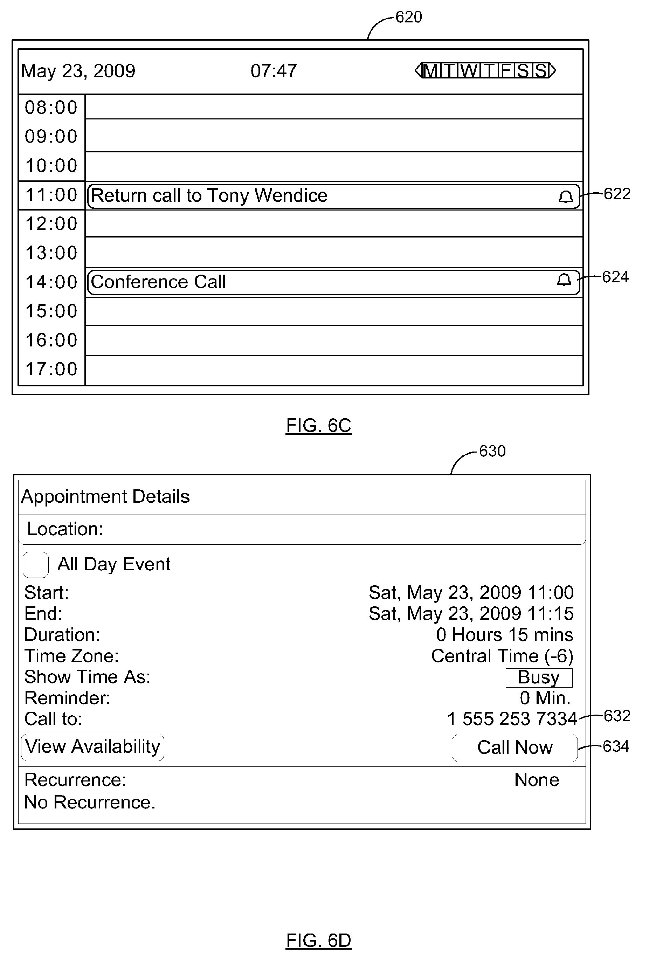

Once the calendar event has been created, CECEGM 435 provides it to the calendar module 440 (directly or via calendar communications interface module 430), where it may be stored in calendar database 444. As previously mentioned, PIM data items (including items stored in calendar database 444) may be seamlessly integrated, synchronized, and updated via wireless network 200 with the mobile device subscriber's corresponding data items stored and/or associated with a host computer system. This functionality creates a mirrored host computer on mobile device 100 with respect to such items. FIG. 6C depicts an example screenshot 620 of example calendar events 622 and 624 as may be viewable through the PIM application 450 of mobile device 100, or through the PIM application of the host system. FIG. 6D depicts an example screenshot 630 showing details for the sample calendar event 622, including associated contact number 632. In certain implementations, a selectable option 634 may be provided which, when selected, causes communications module 420 to call the contact number 632 associated with the calendar event.

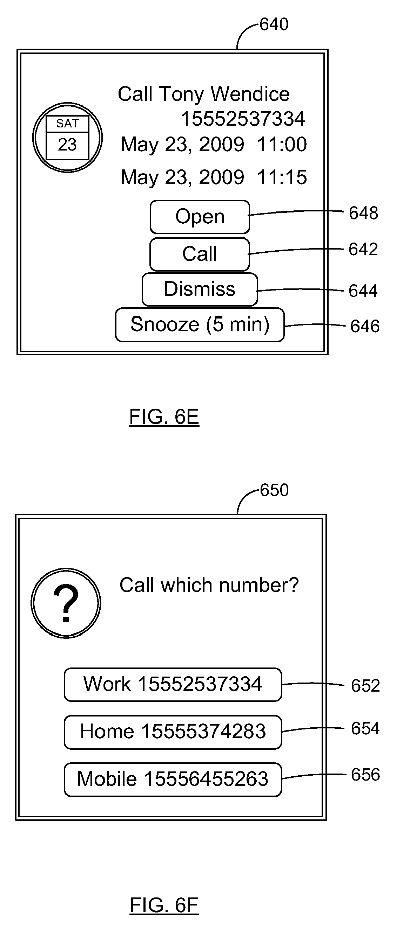

In some implementations, notification module 410, responsive to calendar module 440, may be operative to generate a second notification 640 at event time 564 (or at a time corresponding to the event time, for example 5 minutes before event time 564) of a calendar event 552 to remind a user of the calendar event. Referring now to FIG. 6E, there is depicted an example screenshot of a second notification 640, comprising a selectable option (or button) 642 which, when selected, causes communications module 420 to call the contact number 580 associated with calendar event 552. Second notification 640 may also comprise a selectable option 644 to dismiss the notification (i.e. to remove the second notification 640 from the display), selectable option 646 to 'snooze' - that is to temporarily dismiss - the notification for a default time (e.g. 5 minutes), and/or selectable option 648 to access a detailed view of the calendar event, for example as shown by screenshot 630 in FIG. 6D. Second notification 640 may be displayed on the display 110.

In the example shown in FIG. 6E, second notification 640 is illustrated as indicating that a missed call from "Tony Wendice" is scheduled to be returned. As can be seen, the notification 640 comprises a first selectable option 642 which, when selected, causes communications module 420 to call the contact number associated with the calendar event. In some embodiments, a second selectable option (not shown) may be provided for selecting an alternate contact number from an address data record 502 that contains the contact number associated with the calendar event. FIG. 6F shows a sample screenshot 650 of a notification that may be provided to allow for an alternate contact number. For example, an alternate contact number may be a phone number such as a work phone number 652 (reaching an individual's place of employment), a home phone number 654 (reaching an individual's place of residence), or a mobile phone number 656 (reaching an individual's mobile device).

It will be understood that although a contact number is described above as a phone number, a contact number may also include other alphanumeric strings or data that may be capable of identifying an individual for the purposes of initiating voice communications. For example, such alphanumeric strings or identification data may include a user ID for a Voice over Internet Protocol (VoIP) service such as Skype™.

In some implementations, the first selectable option 642 may be responsive in different ways to different input through the keyboard 116 or one or more of the user input components in the auxiliary I/O subsystem 112, such as a thumbwheel, trackball, optical trackpad, directional pad, joystick, or touchscreen. For example, depressing a 'call' button on keyboard 116 may select the first selectable option 642, while depressing a trackball or trackpad may select the second selectable option.

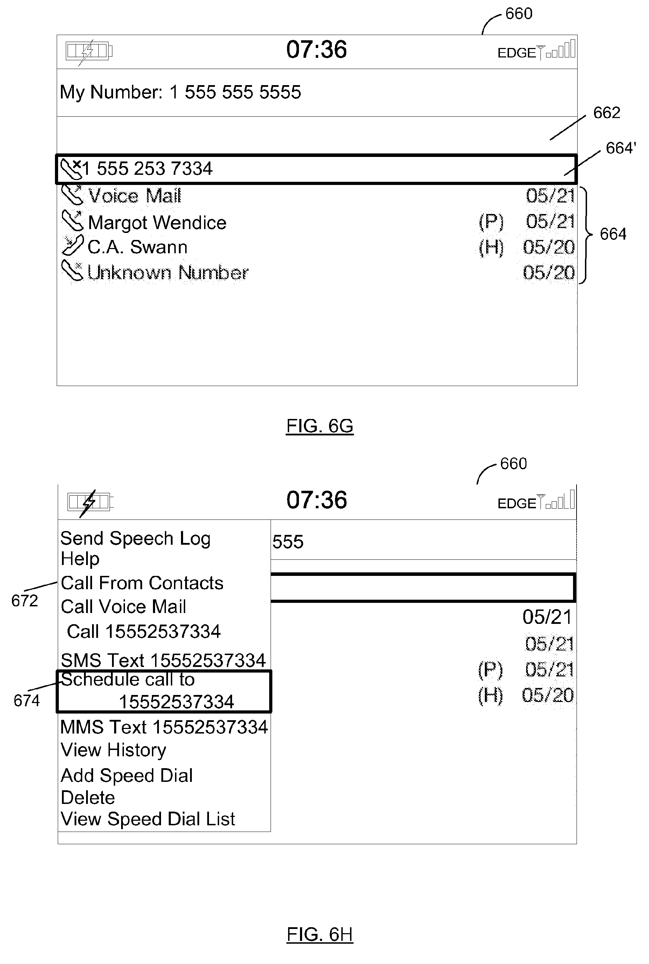

In an alternate embodiment, CECEGM 435 may be activated manually. FIG. 6G shows an example screenshot 660 of a call log 662 as may be displayed on the display 110 of a mobile device 100. Call log 662 lists a plurality of calls 664 made or received by mobile device 100, and may include unanswered calls and missed calls. With reference to FIG. 6G and 6H, if an individual call log entry 664' is selected, a menu 672 may be displayed, including a selectable option 674 which, when selected, causes CECEGM 435 to determine a reminder time and create a calendar event as described above.

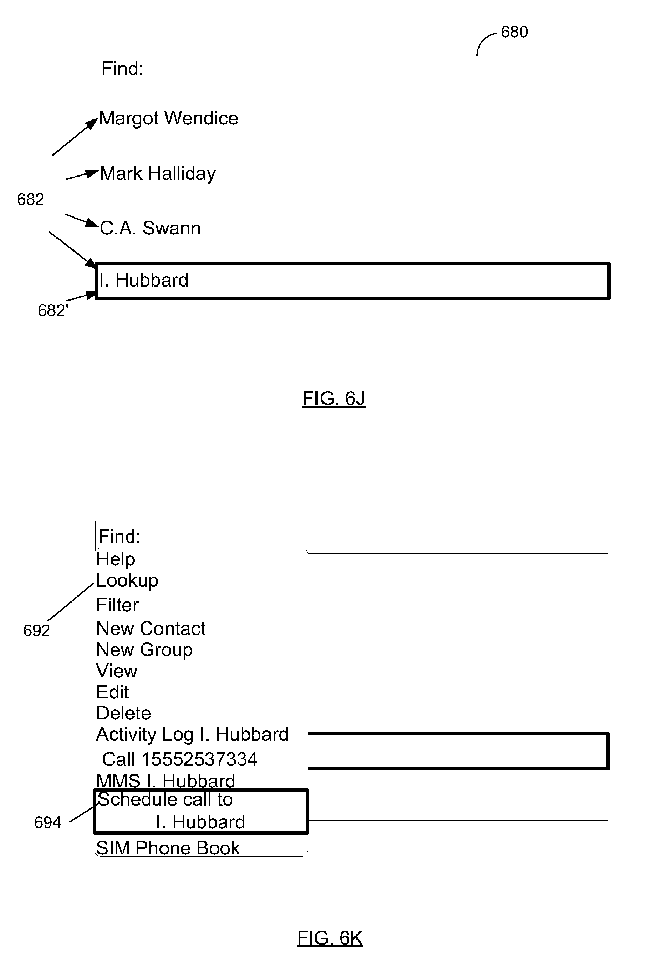

It will be understood that CECEGM 435 may be manually activated in other ways. For example, FIG. 6J shows an example screenshot 680 of address book data 682 as may be displayed on the display 110 of a mobile device 100. In this example, the list of address book data is comprised of individual identifiers 682 (these may correspond to identifiers 500 in address book 424). With reference to FIG. 6J and 6K, if an individual identifier 682' is selected, a menu 692 may be displayed, including a selectable option 694 which, when selected, causes CECEGM 435 to determine a reminder time and create a calendar event as described above.

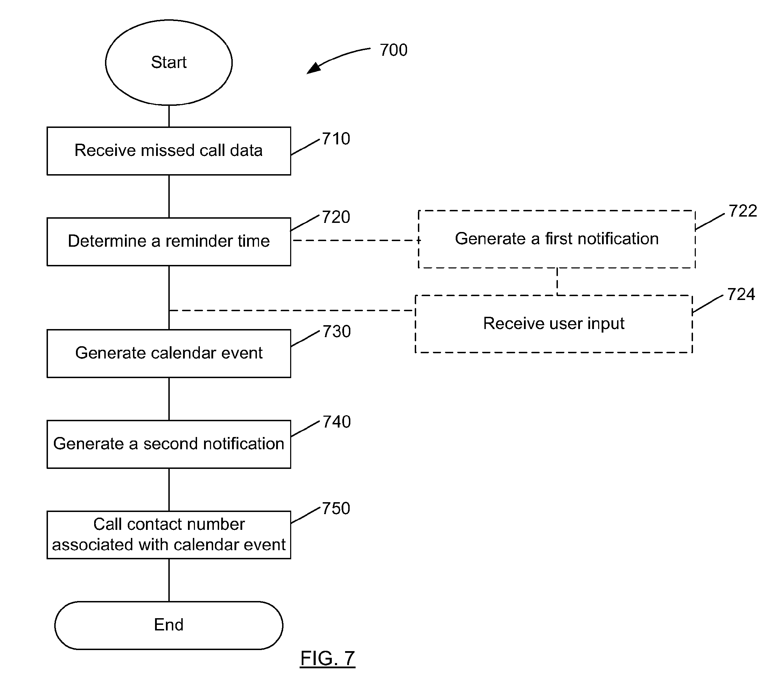

Referring now to FIG. 7, there is shown a method 700 of generating a calendar event associated with contact information corresponding to a missed call data and a reminder time.

In operation, the method 700 may be initiated by an incoming call being regarded as a missed call. Alternately, the method 700 may be initiated manually, as described previously. Once the method 700 has been initiated, CECEGM 435 receives an identifier data 92 corresponding to the missed call (Block 710). CECEGM 435 also determines a reminder time (Block 720). As discussed in greater detail previously, the reminder time may be based upon default reminder time settings stored on mobile device 100 (e.g. configuration settings that define a default reminder time). As an alternative, the reminder time may be determined as a result of user input (Block 724). When determining a reminder time, a first notification 600 may be displayed on the display 110 of the mobile device 100 (Block 722).

Once CECEGM 435 has received an identifier data 92 and determined a reminder time, CECEGM 435 generates a calendar event (Block 730). A discussed previously, this calendar event is provided to calendar module 440 (either directly or via PIM application 450), where it may be stored in calendar database 444.

In response to calendar module 440, notification module 410 may generate a second notification 640 at the event time 564 of a calendar event 552. (Block 740). As discussed in greater detail previously, this second notification 640 may include a selectable option 642 which, when selected, causes communications module 420 to call the contact number 580 associated with calendar event 552 (Block 750). As discussed in greater detail previously, this second notification may include a second selectable option for selecting an alternate contact number 520 from an address data record 502 that contains the contact number 520' associated with the calendar event 552.

In an alternate embodiment, CECEGM 435 is operative to modify an existing calendar event 552 by adding a contact number data 580. In one implementation, a calendar event 552 to which a user may wish to associate contact information (e.g. calendar event 624 as displayed in FIG. 6C) is first selected via input through the keyboard 116 or one or more of the user input components in the auxiliary I/O subsystem 112, such as a thumbwheel, trackball, optical trackpad, directional pad, joystick, or touchscreen. Next, CECEGM 435 is activated to determine a contact number data 580 to be added to the selected calendar event. Contact number data 580 may be provided as a result of user input, as described previously. As an alternative, the contact information may be retrieved from data stored on mobile device 100 (e.g. from address book 424) as described previously.

Once the calendar event 552 has been selected, CECEGM 435 examines the data structure of calendar event 552 to determine if the calendar event 552 being modified comprises a dedicated contact number data field 580 for associating contact information with a calendar event 552. In some implementations, as may be the case for a calendar event 552 that is fully compliant with RFC 2445 or other standards, or is recognized by a PIM application stored on a host system (example PIM applications include Microsoft Outlook™, Entourage™, BlackBerry™ Calendar, etc.), the database structure of calendar event 552 may lack a dedicated contact number data field 580. In this case, CECEGM 435 may store contact number data 580 in an existing field of the database structure, preferably a field that is rarely used. For example, the contact information could be stored in the 'notes' field of an Outlook™ calendar event, shown as 590 in the sample calendar database 444. In some implementations wherein the database structure of calendar event 552 includes a dedicated contact number data field 580, CECEGM 435 may not perform an examination of the data structure of calendar event 552.

Once the calendar event 552 has been selected and contact number data 580 has been determined, CECEGM 435 adds the contact number data 580 to the calendar event 552, either in a contact number data field 580, or in an alternate field, such as a 'notes' field. Once CECEGM has added the contact number data 580 to calendar event 552, the modified calendar event 552 is provided to calendar module 440, where it may be stored in calendar database 444.

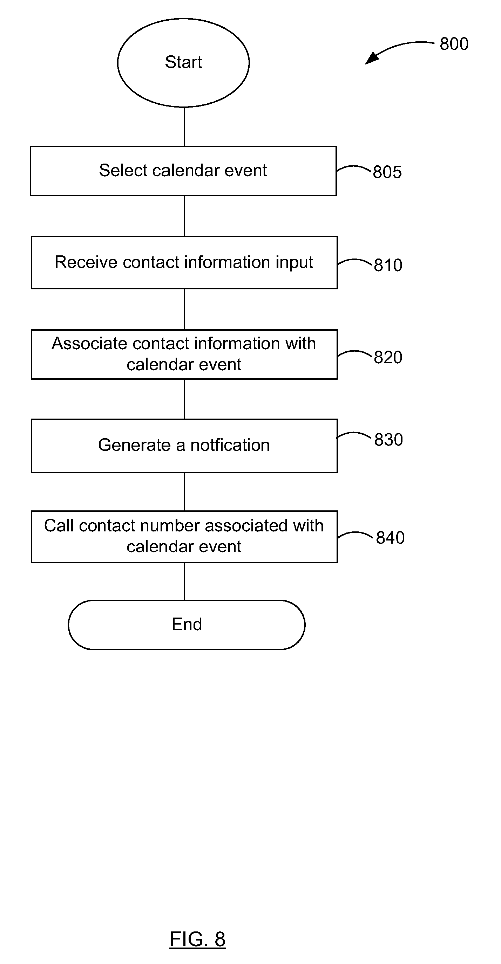

Referring now to FIG. 8, there is shown a method 800 of associating a calendar event with contact information, wherein the calendar event corresponds to an event time.

In operation, the method 800 may be initiated by selecting a calendar event 552 to which a user may wish to associate a contact number 580 (e.g. a calendar event corresponding to a conference call) for modification by CECEGM 435 (Block 805). As discussed in greater detail previously, contact number 580 may be selected from data stored in memory 105 (e.g. a contact number 520 from address book 424) (Block 810). As an alternative, contact number 580 may be provided as a result of user input.

Once a calendar event 552 has been selected and a contact number 580 has been determined, CECEGM 435 is operative to modify calendar event 552 by adding contact number 580 (Block 820). As discussed previously, the modified calendar event 552 is provided to calendar module 440, where it may be stored in calendar database 444.

In response to calendar module 440, notification module 410 may generate a second notification 640 at the event time 564 of a calendar event 552. (Block 830). As discussed in greater detail previously, this second notification 640 may include a selectable option 642 which, when selected, causes communications module 420 to call the contact number 580 associated with calendar event 552 (Block 840). As discussed in greater detail previously, this notification 640 may include a second selectable option for selecting an alternate contact number 520 from an address data record 502 that contains the contact number 520' associated with the calendar event 552.

The steps of a method for generating a calendar event or for associating a calendar event with contact information in accordance with any of the embodiments described herein may be provided as executable software instructions stored on computer-readable media, which may include transmission-type media.

While the above description provides example embodiments, it will be appreciated that some features and/or functions of the described embodiments are susceptible to modification without departing from the spirit and principles of operation of the described embodiments. Accordingly, what has been described above is intended to be illustrative of the claimed concept and non-limiting.

The steps of a method in accordance with any of the embodiments described herein may not be required to be performed in any particular order, whether or not such steps are described in claims or otherwise in numbered or lettered paragraphs.

It will be understood that while the example embodiments have been discussed primarily with reference to phone calls, it will be appreciated that contact information can encompass any identifier or reference number (e.g. an alphanumeric string) that can be used to establish communication with an individual entity.

It will be understood by persons skilled in the art that the features of the user interfaces illustrated with reference to the example screenshots described herein are provided by way of example only. It will be understood by persons skilled in the art that variations are possible in variant implementations and embodiments.

## Claims

1. A system adapted to generate a calendar event, the system comprising:
a communications module (420) adapted to send and receive communication signals;
a calendar database (444) adapted to store a plurality of calendar events (552); and
a communication enabled calendar event generation module (435) operatively coupled to the communications module (420) and to the calendar database (444), the communication enabled calendar event generation module (435) configured to generate a calendar event (552) associated with:
a contact information data corresponding to a missed call, and
a reminder time.

2. The system of claim 1, further comprising
a notification module (410) operatively coupled to the communication enabled calendar event generation module (420) and to the calendar database (444), the notification module (410) configured to generate a first notification (600) corresponding to the missed call.

3. The system of claim 2, wherein the first notification (600) comprises a selectable option (606) for inputting the reminder time.

4. The system of claim 2 or claim 3, wherein the first notification (600) comprises a selectable option (605) to set the reminder time to a default reminder time.

5. The system of any one of claims 2 to 4, wherein the notification module is further configured to generate a second notification (640) at the reminder time, the second notification (640) comprising a selectable option (642) which, when selected, causes the communications module (420) to call a contact number (520) associated with the contact information data.

6. The system of any preceding claim, wherein the calendar event is configured to be recognized by a Personal Information Manager (PIM) application (450) stored on the system.

7. The system of any preceding claim, wherein the system comprises a mobile device.

8. A method (700) of generating a calendar event (552) on a mobile device (100), the method comprising:
receiving missed call data corresponding to a contact information (710);
determining a reminder time (720); and
generating and storing in a calendar the calendar event (552) corresponding to the contact information and the reminder time (730).

9. The method of claim 8 further comprising:
generating a notification at the reminder time (740), the notification (640) comprising a selectable option (642), which when selected, causes the communications device to call a contact number (520) corresponding to the contact information.

10. The method of claim 9, further comprising:
selecting the selectable option (750).

11. A system adapted to associate a calendar event (552) with a contact information data, wherein the calendar event (552) corresponds to an event time, the system comprising:
a calendar database (444) adapted to store a plurality of calendar events (552); and
a communication enabled calendar event generation module (435) operatively coupled to the calendar database (444), the communication enabled calendar event generation module (435) being configured to associate the calendar event (552) with the contact information data.

12. The system of claim 11, further comprising:
a notification module (410) operatively coupled to the calendar database (444), configured to generate a notification at the event time, the notification (640) comprising a selectable option (642) which, when selected, causes a communications module to call a contact number (520) corresponding to the contact information data associated with the calendar event.

13. A method (800) of associating contact information with a calendar event (552) stored in a calendar, wherein the calendar event (552) corresponds to an event time, the method comprising:
selecting the calendar event (805);
receiving a contact information input corresponding to a contact information (810); and
associating the contact information with the calendar event (820) by storing data corresponding to the contact information in the calendar event (552).

14. The method of claim 13, further comprising
generating a notification at a time corresponding to the event time (830), the notification (640) comprising a selectable option (642) which, when selected, causes a communications device to call a contact number (520) corresponding to the contact information; and
selecting the selectable option (840).

15. A computer-readable medium comprising instructions executable on a processor of a device to implement the method of any one of claims 8 to 10, 13 or 14.

## Amended claims

### Amended claims in accordance with Rule 137(2) EPC.

**1.** A system adapted to generate a calendar event, the system comprising:
a communications module (420) adapted to send and receive communication signals;
a calendar database (444) adapted to store a plurality of calendar events (552); and
a communication enabled calendar event generation module (435) operatively coupled to the communications module (420) and to the calendar database (444),
the communication enabled calendar event generation module (435) configured to generate a calendar event (552) associated with:
a contact information data corresponding to a missed call, and
a reminder time,
wherein the calendar event (552) is configured to be recognized by a Personal Information Manager application (450) stored on the system.

**2.** The system of claim 1, further comprising
a notification module (410) operatively coupled to the communication enabled calendar event generation module (420) and to the calendar database (444), the notification module (410) configured to generate a first notification (600) corresponding to the missed call.

**3.** The system of claim 2, wherein the first notification (600) comprises a selectable option (606) for inputting the reminder time.

**4.** The system of claim 2 or claim 3, wherein the first notification (600) comprises a selectable option (605) to set the reminder time to a default reminder time.

**5.** The system of any one of claims 2 to 4, wherein the notification module is further configured to generate a second notification (640) at the reminder time, the second notification (640) comprising a selectable option (642) which, when selected, causes the communications module (420) to call a contact number (520) associated with the contact information data.

**6.** The system of any preceding claim, wherein the system comprises a mobile device.

**7.** A method (700) of generating a calendar event (552) on a mobile device (100), the method comprising the steps of:
receiving missed call data corresponding to a contact information (710);
determining a reminder time (720); and
generating and storing in a calendar the calendar event (552) corresponding to the contact information and the reminder time (730),
wherein the calendar event (552) is configured to be recognized by a Personal Information Manager application (450).

**8.** The method of claim 7 further comprising the step of:
generating a notification at the reminder time (740), the notification (640) comprising a selectable option (642), which when selected, causes the communications device to call a contact number (520) corresponding to the contact information.

**9.** The method of claim 8, further comprising the step of:
selecting the selectable option (750).

**10.** A system adapted to associate a calendar event (552) with a contact information data, wherein the calendar event (552) corresponds to an event time, the system comprising:
a calendar database (444) adapted to store a plurality of calendar events (552); and
a communication enabled calendar event generation module (435) operatively coupled to the calendar database (444), the communication enabled calendar event generation module (435) being configured to associate the calendar event (552) with the contact information data,
wherein the calendar event (552) is configured to be recognized by a Personal Information Manager application (450) stored on the system.

**11.** The system of claim 10, further comprising:
a notification module (410) operatively coupled to the calendar database (444), configured to generate a notification at the event time, the notification (640) comprising a selectable option (642) which, when selected, causes a communications module to call a contact number (520) corresponding to the contact information data associated with the calendar event.

**12.** A method (800) of associating contact information with a calendar event (552) stored in a calendar, wherein the calendar event (552) corresponds to an event time, the method comprising the steps of:
selecting the calendar event (805);
receiving a contact information input corresponding to a contact information (810); and
associating the contact information with the calendar event (820) by storing data corresponding to the contact information in the calendar event (552),
wherein the calendar event (552) is configured to be recognized by a Personal Information Manager application (450).

**13.** The method of claim 12, further comprising the steps of:
generating a notification at a time corresponding to the event time (830), the notification (640) comprising a selectable option (642) which, when selected,
causes a communications device to call a contact number (520) corresponding to the contact information; and
selecting the selectable option (840).

**14.** A computer-readable medium comprising instructions executable on a processor of a device to implement the method of any one of claims 7 to 9, 12 or 13.
